# EUROPEAN PATENT SPECIFICATION

(11) **EP 1 971 222 B1**
(45) Date of publication and mention of the grant of the patent: **10.04.2013**
(21) Application number: 06827779.7
(22) Date of filing: 14.11.2006
(51) Int. Cl.: A23G 3/34, A23G 3/54, A21D 13/00, A23L 1/22, A23L 1/164

(54) **REDUCED SWEETNESS CONFECTIONARY COMPOSITIONS AND COATED/FILLED FOOD PRODUCTS**
SÜSSWARENZUSAMMENSETZUNGEN UND BESCHICHTETE/GEFÜLLTE NAHRUNGSMITTELPRODUKTE MIT REDUZIERTER SÜSSE
COMPOSITIONS DE CONFISERIE ET PRODUITS ALIMENTAIRES ENROBES/FOURRES A SUCROSITE REDUITE

(30) Priority: 15.11.2005 US 736883 P; 10.11.2006 US 558537
(43) Date of publication of application: 24.09.2008
(73) Proprietor: GENERAL MILLS, INC., Minneapolis, MN 55440 (US)
(72) Inventor: KUBANTSEVA, Natalia, St. Louis Park, Minnesota 55426 (US); BOYLE, Janet L., St. Paul, Minnesota 55105 (US); SCHMELZER, Julia M., St. Louis Park, Minnesota 55426 (US)
(74) Representative: Vossius & Partner
(86) International application number: PCT/US2006/044060
(87) International publication number: WO 2007/059066

(56) References cited:
- EP-A1- 0 561 513
- US-A- 4 038 423
- US-A- 5 045 336
- US-A- 5 045 336
- US-A1- 2002 168 448
- US-A1- 2005 053 695
- US-B1- 6 592 915
- DATABASE FSTA [Online] INTERNATIONAL FOOD INFORMATION SERVICE (IFIS), FRANkFURT-MAIN, DE; XP002616685, Database accession no. FS-1991-09-K-0017 & LAUSTSEN, K.: "The nature of fat bloom in molded compound coatings", MANUFACTURING CONFECTIONER, vol. 71, no. 5, 1991, pages 137-144,

## Description

### FIELD OF THE INVENTION

The invention relates to low moisture confectionery coating and/or filling compositions with a high percentages of sugar but a reduced sweetness due to the presence of a sweetness reducing agent. The invention further relates to food products having such reduced sweetness confectionery coatings and/or fillings, such as granola and cereal bars.

### BACKGROUND OF THE INVENTION

Confectionery compositions, such as yogurt coatings, milk coatings, flavored confectionery coating or other coatings or fillings, provide a low moisture flavoring that can be used to coat desired food products or similarly to provide flavored fillings. Confectionery compositions can be used as a component with a range of products, such as yogurt coated nuts, coated raisins, coated cookies, other coated baked goods, cookie fillings and as a coating or filling for cereal bars. Confectionery coatings are distinguished by their low moisture levels, high sugar levels and generally significant fat levels and can be distinguished from frosting and the like, which have much higher moisture levels and thus provide extended shelf stability even when stored at room temperatures. Such products also generally provide physical and dimensional stability even when exposed to elevated temperatures during routine commercial distribution and storage such as trucking during summer months. Confectionery coatings are also called compound coatings.

Cereal bars and granola bars provide a convenient and relatively nutritious snack food. Cereal bars/granola bars can be conveniently packaged in disposable packaging materials. The application of a coating and/or filling to a cereal bar/granola bar can be used to provided a desirable taste, additional nutrients and/or a desired texture to a cereal bar/granola bar product.

EP 0 561 513 A1 describes a process for the production of a confection, especially of a cereal bar possessing a chocolate covering or shell, and wherein the process is implemented through the intermediary of an installation incorporating a continually operating or advancing molding line.

US 6,592,915 B1 relates to a layered cereal bar with at least two cereal layers having identifiable RTE cereal pieces and at least one visible filling layer in between the two cereal layers.

US 2002/168448 A1 discloses a nutritional food bar for providing sustained energy to the consumer having a core, a coating, and comprising a mixture of vitamins, minerals, proteins, carbohydrates and fats.

US 2005/053695 A1 describes methods and compositions for repositioning micronutrients, especially calcium, in a food product, such as a nutritional bar. The methods include applying a layer of a micronutrient, especially calcium, fortified matrix to a food bar core.

US 4,038,423 relates to a food bar comprising a base and a coating, the bas containing marshmallow fortified with a high protein ingredient of reduced water binding capability.

### SUMMARY OF THE INVENTION

In a first aspect, the invention pertains to a confectionery coating and/or filling composition comprising at least 25% by weight sugar, at least 5% by weight fat, and a sweetness reducing agent. The moisture content of the confectionery coating and/or filling composition is no more than 2% by weight. The sweetness reducing agent has a formula of 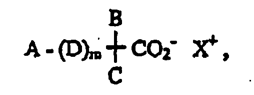
wherein m is 0 or 1;
A represents a homocyclic or heterocyclic aromatic group with one or more rings;
B represents a hydrogen atom, a lower aliphatic group with 1-3 carbon atoms or a phenyl group; or when m=0, A and B together can represent a bivalent homocyclic or heterocyclic aromatic group with two or more rings, or a methylidene group carrying as a substituent a homocyclic or heteocyclic aromatic group with one or more rings, an aromatic ring of A or of A and B together, optionally having one to three substituents selected from the group of lower alkoxy groups, lower alkyl groups, formyl groups, acetyl groups, hydroxy groups, acyloxy groups and halogen atoms;
C represents a hydrogen atom, or an alkyl group, or when m=0, a hydroxy group or an alkoxy group;
D represents an oxygen or a sulfphur; and
X⁺ represents a hydrogen ion or other physiologically compatible cation.

The confectionery coating and/or filling can be associated with a core food element to form a food item with a coating and/or filling.

In further aspects, the invention pertains to a method for forming a food item comprising associating a reduced sweetness confectionery coating and/or filling with a core food element or base. The reduced sweetness confectionery coating and/or filling comprises a sweetness reducing agent and has a moisture content of no more than 2% by weight.

In other aspects, the invention pertains to a bar comprising a cereal portion and a coating. The cereal portion comprises at least 25% by weight grain products and at least 25% by weight sugar, and the coating comprises at least 25% by weight sugar and a sweetness reducing agent comprising an aromatic-carboxylate salt.

### BRIEF DESCRIPTION OF THE DRAWINGS

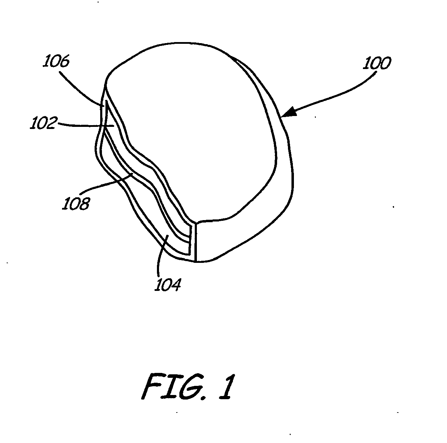

Fig. 1 is a schematic perspective fragmentary view of a food item with a reduced sweetness confectionery coating and filling.

### DETAILED DESCRIPTION OF THE INVENTION

Improved confectionery coatings have a reduced sweetness to provide a more desirable taste to the average consumer while providing desirable physical properties and overall taste. The reduced sweetness is provided through the addition of low quantities of a sweetness reducing agent, such as Lactisole^{™} or similar compound. In some embodiments, an improved taste results from the delivery of the Lactisole^{™} in a form co-crystallized with sugar, generally sucrose. The confectionery coating and/or compositions have a low moisture content such that they are suitable for use with a range of food products while having a long shelf life and desirable taste for the consumer. The confectionery compositions can be suitable for coatings, fillings or both, although minor formulation differences can be used for coatings compared with fillings if different consistencies are desired. These confectinery compositions are particularly advantageous for the production of cereal bars in which the confectionery composition can be used as a filling and/or as a coating.

Referring to Fig. 1, food item 100 comprises a first layer 102, a second layer 104, a confectionery coating 106 of the present disclosure and a confectionery filling 108 of the present disclosure. Any particular food item may only have a coating and/or a filling. Also, a coating may cover the whole surface of the food item or only a portion of the surface. For example, the coating may only cover the top, only the bottom, only the sides, portions of these sections, combinations of these sections or any other desired portion of the surface of the food item, such as in the form of a drizzle topping. Similarly, the coating can be continuous or intermittent. A coating may or may not be uniform over the areas applied. For example, the flavor, color and/or thickness may be different at different locations over the surface of the food item. Similarly, a filling may or may not be uniform across the food item. For example, a filling may only be placed at the center of the food item rather than across a layer extending through a section of the food item. Similarly, for a food item with both a filling and a coating, the filling and coating can be different from each other with respect to color, flavoring, consistency or other aesthetic features as desired. Also, the food product 100 can further comprise a filling (not shown) or a coating (not shown) not fabricated from the instant improved confectionery compositions. A person of ordinary skin in the art can select a desired coating and/or filling to meet the particular aesthetics of the desired food product.

Unless otherwise specified, all percentages recited herein are percentages by weight. Throughout the specification and claims, percentages are by weight, unless otherwise indicated.

The present confectionery coating and/or filling compositions are characterized by their high sugar content, significant fat content and their low moisture content. In general, the confectionery compositions have a moisture content of no more than 2% water and generally much less than this. The confectionery coatings generally have additional flavorings and nutrients added to impart desirable characteristics to the coating for particular applications. For example, in some embodiments, the confectionery compositions further comprises, for example, a yogurt powder, dried milk or chocolate flavoring. The present confectionery compositions further comprises an aromatic-carboxylate acid (carboxylic acid) sweetness reducing agent, such as Lactisole^{™} or chemically related compositions, in low quantities, but in sufficient amounts to reduce the taste for the average consumer to a desired level.

Lactisole is the common name for 2-p-methoxyphenoxypropionic acid. The method for reducing sweetness based on this composition is described further in U.S. Patent 5,045,336 to Lindley et al., entitled "Method of Modifying Sweet Taste," . Lactisole^{™} associated with sucrose is commercially available from Domino Sugar Company in their products Envision^{®} and Super Envision^{®}. In Envision^{®}, the Lactisole^{™} is co-crystallized with sucrose. Lactosole^{™} is one compound in a class of aromatic-carboxylate salt compounds that have been identified as sweetness reducing agents as a result of their blockage of sweetness receptors in a person's mouth. The related compounds are described in U.S. Patent 5,045,336 and summarized below. Related effective compounds in this class can be substituted for the Lactosole^{™}.

The present confectionery compositions can be used to produce reduced sweetness coatings and/or fillings for any food product in which such compositions are desired. In particular, yogurt coatings and other flavored coatings have been used with peanuts, tree nuts, pretzels, raisins, other dried fruits, Ready-To-Eat (RTE) cereal, seeds, candy, malted milk balls, and the like. These can be identified as bite sized snack foods. Similarly, the reduced sweetness confectionery composition can be used with smaller agglomerated nuggets that can or not comprise cereal pieces. Also, confectionery coatings and fillings can be used with cookies, muffins or other baked goods. Furthermore these confectionery coatings and fillings can be used very effectively for careal bars. Consumers of cereal bars tend to favor products that are less sweet than the traditional confectionery coated products. Therefore, these reduced sweetness compositions are particularly desirable for use with cereal bars.

While sweetness can be reduced in principle through the reduction in the sugar content or through the substitution of less sweet tasting sugar alcohols, such as sorbitol, for certain sugars, these approaches have the drawback of significantly changing the properties of the compositions. Also, sugar alcohols tend to be used with bulking agents that also can influence the properties of the resulting product. In addition, sugar alcohols in larger quantities have been identified with undesirable intestinal side effects that make them undesirable in larger quantities. The sweetness reducing agents are used in low quantities that do not significantly change the consistency or other properties of the coating and/or filling compositions. For cereal bars, embodiments with reduced amounts of sugar in the binder have been described in Published U.S. Patent 2004,0166206A to Archibald et al., entitled "Vacuum Packaged Food Products and Method of Making the Same." However, this approach requires costly vacuum packaging equipment to form the bar within the packaging material.

In contrast, products formed with the sweetness reducing agents described herein generally have essentially the same properties as the equivalent product without the sweetness reducing agent. Also, especially when used in a form co-crystallized with sugar, the sweetness reducing agents within the products have a clean, i.e., unmodified, taste relative to a comparable product without the sweetness reducing agent, except for a discernable reduction in sweetness sensation. This surprising result of sweetness reduction at low additive levels can be obtained with commercial Envision^{™} product, which has Lactisole™ co-oystallized with sucrose. The sweetness reduction is greater with Lactisole™ co-crystallized with sucrose than with equivalent amounts of Lactisole™ added in forms that are not co-crystallized with a sugar.

### Reduced Sweetness Confectionery Coatings and/or Fillings

The reduced sweetness confectionery coating and/or filling composition comprises at least 25% sugar, at least 5% fat and and aromatic-carboxylate salt sweetness reducing agent, such as Lactsole™, with a resulting moisture level of the composition of no more than 2% water. The sweetness reducing agent is generally at levels less than 5000 parts per million (ppm). The confectionery coating and/or filling generally further comprises desired flavorings, other additives and the like. In particular, some embodiments of the confectionery coating and/or filling compositions comprise a dry dairy product, such as yogurt powder, dry milk (especially non fat dry milk powder) or the like.

The low moisture content is significant for generating the distinct properties of the confectionery coating and/or filling. Similarly, the high fat and sugar levels also contribute to the confectionery nature of the coatings and/or fillings. While the coatings and/or fillings are quite low moisture, if properly formulated, the compositions are not susceptible to significant water migration when used as a coating or filling on a food product with somewhat higher moisture levels. Thus, the coatings and filings can have very good shelf life properties suitable for successful commercial products. Since relatively low levels of Lactisole^{™} or other related sweetness reducing agents are used to obtain the desired reduced sweetness, the formulations with reduced sweetness can track closely with high sweetness formulations to obtain similar physical properties and aesthetic feeling of the reduced sweetness confectionery coating and/or filling compositions.

More specifically, the sugar levels are generally at least 25%, in further embodiments from 30% to 80% and in other embodiments from 35% to 75%. A person of ordinary skill in the art will recognize that additional ranges of sugar concentrations are conceived and are within the present disclosure. Suitable sugar, i.e. sweet tasting carbohydrates, include, for example, sucrose, fructose, lactose, maltose, galactose, xylose, dextrose, trehalose (diglucose), corn syrups, honey, molasses, refiners syrups, malt syrups, corn syrup solids, corn syrups and mixtures thereof. Useful sugars generally include, for example, monosaccharides, disaccharides or oligosachharides and their various degradation products that have an identifiable sweet taste, with additional particular examples being arabinose, glucose, galactose, mannose, and brown sugar. While particular attention is made herein to refined sugar ingredients, such as cane sugar or sucrose, the skilled artisan will appreciate that less pure sugar sources, such as fruit juice solids can also be employed. In some embodiments, the sugar particles have an average particle size of less than about 100 microns, and in further embodiments from about 1 to about 50 microns, such that the composition does not have significant gritty mouthfeel.

The confectionery coatings and/or fillings generally comprise at least 5% fat, in further embodiments, from 7% to 55% and in other embodiments from 10% to 50% fat. A person of ordinary skin in the art will recognize that additional ranges of fat levels within the explicit ranges above are contemplated and are within the present disclosure. Fats refer broadly to fatty acids, fatty acid-glycerol esters and other fatty acid esters. Fats or fat blends of particular interest are solids at room temperature but with a low melting temperature generally from about 23°C to about 45°C, and in further embodiments from about 30°C to about 34°C. Thus, fats refer to butter, various vegetable oils, animal oils, fish oils, hydrogenated natural oils and combinations thereof. Some specific examples include, for example, hydrogenated or unhydrogenated, butter fat, cocoa butter, lard, corn oil, cotton seed oil, palm oil, peanut oil, safflower oil, sesame oil, rice bran oil, soybean oil, canola oil, tallow, tallow oil, and the like and mixtures thereof. Processed palm oil can be used in a blend of hydrogenated and nonhydrogenated forms. In less preferred embodiments, all or a portion of the fat ingredient can be replaced with non-absorbable fat mimics especially sucrose polyesters.

In some embodiments, the confectionery coating and/or filling further comprises a dry dairy ingredient, which can comprise protein and other dairy components. In these embodiments, the confectionery coating generally comprises 0.5% to 20% dry dairy ingredient, and in further embodiments from 2% to 15% dry dairy ingredient. A person of ordinary skill in the art will recognize that additional ranges of dry dairy ingredient within the explicit ranges are contemplated and are within the present disclosure. Dry dairy ingredients generally comprise a majority of compounds by weight derived from milk, which may be microbially modified. While milk generally refers to bovine milk, the milk can be goat's milk, sheep's milk, other mammalian milk, or combinations thereof. Suitable dry dairy ingredients include, for example, active yogurt powder (especially freeze dried yogurt powder), inactive yogurt powder, yogurt-type powder, nonfat dry milk, whole dry milk, milk solids, whey solids, fermented dairy solids, such as cheese, sour cream, and cream cheese, and the like. The incorporation of active yogurt cultures into a compound fat composition is described further in copending PCT Patent Application WO-A-2006/007463 to Petersen, entitled "Cultures Encapsulated With Compound Fat Breakfast Cereals Coated With Compound Fat and Methods of Preparation,". Similarly, a chocolate based composite fat is described further in PCT Patent Application WO-A-2006/007470, entitled Cultures Encapsulated With Chocolate Food Products Coated With Chocolate and Methods of Preparation,".

As noted above, the reduced sweetness confectionery coating and/or filling compositions comprise no more than 2% moisture content. In other embodiments, the reduced sweetness confectionery coating and/or filling compositions comprise no more than 1.5% moisture and in further embodiments no more than 1% moisture. A person of ordinary skill in the art will recognize that additional ranges of moisture/water content within the explicit ranges above are contemplated and are within the present disclosure. An upper limit on the moisture content can be estimated from the moisture content in the ingredients.

The reduced sweetness compositions generally comprise no more than 5000 parts per million by weight (ppm) sweetness reducing agent, in further embodiments no more than 2000 ppm, in other embodiments from 10 ppm to 1000 ppm, and in additional embodiments from 25 ppm to 600 ppm. A person of ordinary skill in the art will recognize that additional ranges of sweetness reducing agent concentrations within the explicit values above are contemplated and are within the present disclosure. In some embodiments, the amount of sweetness reducing agent is selected to be an effective amount in the sense that to an average consumer, the composition has a noticeably reduced sweetness relative to the equivalent composition without the sweetness reducing agent. It has been found that improved results with respect to reducing sweetness with reduce or eliminated after tastes can be obtained with the sweetness reducing agents that are co-crystallized with sugar. Envision^{®} available from Domino's Sugar has Lactisole co-crystallized with sucrose.

The sweetness reducing agent comprises a compound having the formula 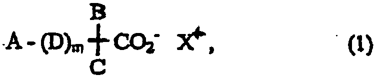 wherein m is 0 or 1;
A represents a homocyclic or heterocyclic aromatic group with one or more rings;
B represents a hydrogen atom, a lower aliphatic group with 1-3 carbon atoms or a phenyl group; or when m=0, A and B together can represent a bivalent homocyclic or heterocyclic aromatic group with two or more rings, or a methylidene group carrying as a substituent a homocyclic or heteocyclic aromatic group with one or more rings, an aromatic ring of A or of A and B together, optionally having one to three substituents selected from the group of lower alkoxy groups, lower alkyl groups, formyl groups, acetyl groups, hydroxy groups, acyloxy groups and halogen atoms;
C represents a hydrogen atom, or an alkyl group, or when m=0, a hydroxy group or an alkoxy group;
D represents an oxygen or a sulfur, and
X⁺ represents a hydrogen ion or other physiologically compatible cation.
Lower organic groups refer to groups with no more than three carbon atoms. It is assumed that at physiological pH values, these compounds are essentially present in the noted salt forms, although a small portion will be present in the acidic form based on the acid-base equilibrium. In some embodiments, when m=1, A represents a substituted or unsubstituted phenyl group, and B and C both represent hydrogen atoms, or when A represents an unsubstituted phenyl group, B represents an alkyl group and C represents a hydrogen atom. For convenience, this class of compounds represented in Eq. (1) is referred to herein as aromatic-carboxylate salt sweetness reducing compounds.

These compounds were identified for their sweetness reducing properties in U.S. Patent 5,045,336 to Linley et al.,. Compounds in this class with particularly desirable sweetness reducing properties include, for example, (±)-2-phenoxypropionic acid (C.A. 940-31-8), S-(-)-2-phenoxypropionic acid (C.A. 1912-23-8), (±)-2-phenoxybutyric acid (C.A. 13794-14-4), S-(-)-2-phenoxybutyric acid (C.A. 19128-85-9), (±)-2-p-methoxyphenoxybutyric acid (C-A. 67649-60), (±)-2-p-methylphenoxypropionic acid (C.A. 22504-83-2), S-(-)-2 p-methylphenoxypropionic acid (Fredga and Backstrom, Arkiv, Kemi, 25:455 (1966)) (±)-2-p-ethylphenoxypropionic acid (C.A. 24431-28-5), (±)-2-p-methoxyphenoxypropionic acid (C.A. 13794-15-5), S-(-)-2-p-methoxyphenoxypropionic acid (C.A. 4276-74-8), 2-p-methoxyphenoxy-2-methylpropionic acid (C.A. 17509-51-5), (±)-2-p-ethoxyphenoxypropionic acid (G.B. Patent 916242), p-methylphenoxyacectic acid (C.A. 940-64-7), phenoxyacetic acid (C.A. 122-59-5 acid, C.A. 3598-16-1 salt), p-methoxyphenoxyacetic acid (C.A. 1877-75-4), p-ethoxyphonoxyacetic acid (C.A. 5327-91-3), (±)-2-p-chlorophenoxypropionic acid (C.A. 3307-39-9), S-(-)-2-p-chlorophenoxypropionio acid (C.A. 20421-35-6), 2-phenoxy-2-methylpropionic acid (C.A. 943-45-3), 2,4-dimethylphenoxyacetic acid (A.C. 13334-49-1), p-acetylphenoxyacetic acid (C.A. 1878-81-5), p-isopropylphenoxyacetic acid, p-ethylphenoxyacetic acid (C.A. 24431-27-4), p-formylphenoxyacetic acid (C.A. 22042-11-3), salts thereof and combinations thereof. C.A. indicates the chemical abstract numbers, which are also now known as CAS numbers. A range of other compounds available, for example, from Aldrich, are described in U.S. Patent 5,045,336 as having some sweetness reducing activity. 2-p-methoxyphenoxypropionic acid or equivalently 2-4-methoxyphenoxypropionic acid and the salt forms are also known as Lactisole^{™}. An example of a compound with sweetness reducing activity and with D in formula (1) being a sulfur is phenylthioacetic acid. Compounds with m=0 or with m=1 and D being an oxygen moiety.

The confectionery coating and/or filling can further comprise other flavorings. In some embodiments, the confectionery coating and/or filling comprises no more than about 8% additional flavorings, and in further embodiments from about 0.1% to about 6%. A person ordinary skill in the art will recognize that additional ranges within the explicit ranges of flavoring mounts are contemplated and are within the present disclosure. Other suitable flavorings include, for example, vanilla, cocoa, vanillin, salt, coffee, chocolate flavoring berry and fruit flavors, acids (lactic, malic and the like), caramel, mint and combinations thereof.

In some embodiments, it is desirable to include property modifiers in the confectionery coatings and/or fillings. For example, the confectionery coating and/or filling can comprise from about less than about 1% emulsifier, and in further embodiments, from about 0.001% to about 025% emulsifier. A person of ordinary skill in the art will recognize that additional ranges of emulsifier concentrations within the explicit ranges above are contemplated and an within the present disclosure. Suitable emulsifiers include, for example, soya lecithin, lecithin, polysorbate, sorbitan monostearate and combinations thereof. Other additives generally added at no more than about 2% include, for example, colorants, such as titanium dioxide, antioxidants, such as tocopherols or the like, chelating agents, antimicrobial agents, probiotic bacteria, vitamins, fiber, color and the like.

To generate a composition with a fluffy texture, the reduced sweetness confectionery coating and/or filling composition can be aerated. In other words, the air is dispersed within the composition to alter the texture of the composition. The air can be injected or otherwise folded into the composition to form air pockets or bubbles within the composition. Apparatuses and processes for aerating a confectionery coating generally is described further in U.S. Patent 6,951,660 to Brown et al., entitled "confectionery Coatings," and these apparatuses and processes can be adapted for the aeration of the reduced sweetness confectionery coating and/or filling compositions described herein. The density of the coating and/or filling can be roughly 1.15 g/cc, while the density of the aerated coating and/or filling can be from about 0.85 g/cc to about 0.95 g/cc. The aerated reduced sweetness confectionery coating and/or filling can be used as a frosting. Cereal Bars and Other Cereal Products

Cereal bars are identifiable since they have a significant amount of grain products in the body of the bar held together with a sugar-based binder. In some embodiments, the bars have visually identifiable ready-to-eat cereal components held together with the binder. The cereal bars provide a substrate for the addition of a filling and/or coating formed with the reduced sweetness confectionery coating and/or filling described herein. Similarly, the reduced sweetness confectionery coating and/or filling can be used to coat directly ready-to-eat (RTE) cereal pieces to form a new RTE cereal product For convenience of terminology, cereal bars herein encompasses granola bars, which commercially tend to have less processed ingredients such as intact visible grains and/or fruits. Also, the confectionery coatings and/or fillings can be used with other edible bars, such as baked bars described further bellow.

U.S. Patent 6,592,915B to Froseth et al., entitled "Layered Cereal Bars and Their Methods of Manufacture" describes in detail representative embodiments of cereal bars. The RTE cereal components can comprise cereal pieces, such as flakes, shreds, biscuits, and puffed shapes, such as rings, spheres, rounds, triangles, hexagons, tubes, oblongs and the like. The cereal pieces can be from flaked grains such as oat flakes (especially for the provision of granola bars) or fabricated from a cooked cereal dough. While in general a cereal bar can comprise fragments of RTE cereal products or other grain components, in some embodiments, it may be desirable to have visually identifiable RTE cereal pieces in the bar, such as any type sold under the Cheerios® mark (e.g., regular Cheerios®, Apple Cinnamon Cheerios®, Honey Nut Cheerios®), any type of Chex® (e.g., Honey Nut Chex®, Wheat Chex®, Rice Chex®, Corn Chex®, Bran Chex®), Cocoa Puffs®, Cinnamon Toast Crunch®, Oatmeal Raisin Crisp®, Wheaties®, Total®, generic substitute for these, other RTE cereal products, various combinations of one or more cereal types, and the like. The RTE cereal can have a sugar coating over all or a portion of the cereal components.

RTE cereals generally have a moisture content of no more than about 3% and a water activity (Aw) of about 0.2. RTE cereals can be an excellent source of many nutrients, such as protein and/or fiber. In some embodiments, the RTE cereal component has a fiber content from about 2.5% to about 6%. A person of ordinary skill in the art will recognize that additional ranges of moisture content and fiber content within the explicit ranges above are contemplated and are within the present disclosure.

Generally, the binder used to hold the cereal pieces together in the bar comprise a significant amount of sugar as a binder. The cereal components and the binder can be combined at a weight ratio from about 0.8:1 to about 1.5:1 and in further embodiments from about 1:1 to about 1.2:1. A person of ordinary skill in the art will recognize that additional ranges of cereal to binder ratios within the explicit ranges above are contemplated and are within the present disclosure.

The binder can be just a sugar solution, honey or the like. In some embodiments (such as those intended to provide higher protein levels), the binder comprises a sugar solution supplemented with a soy protein/fat mixture and hydrated gelatin. The sugar solution can comprise corn syrup, glycerin and/or dry sugars, such as fructose, sucrose and the like. In some embodiments, the ratio of wet to dry ingredients in the binder can be about 3:1 to about 1.5:1, or in other embodiments about 2.2:1. However, in some embodiments, about 0.5% water is added to the binder to result in an Aw of about 0.45 to about 0.6 in the finished binder. A person of ordinary skill in the art will recognize that additional ranges within the explicit ranges of ratio of wet to dry ingredients and water activities are contemplated and are within the present disclosure. Care should be taken such that the bar product comprising cereal base ingredients and binder syrups have water activity values that provide extended shelf stability at room temperatures. Good results are obtained with water activity values ranging from about 0.38 to about 0.48.

The soy protein/fat mixture can be comprised of soy protein isolates suspended in a suitable amount of fat. In one embodiments, soy protein and fat are combined in a ratio of about 3:2. In one embodiment, the hydrated gelatin comprises water and gelatin in a ratio of about 4:1. The binder can further comprise other minor ingredients, such as antioxidants, flavorings, colors, vitamins, minerals and emulsifiers.

The cereal bar can further include, for example, additional food ingredients, such as nuts, nut pieces, marshmallows, marshmallow bits (marbits), candies, candy pieces, cookie pieces, chocolate products (e.g., chocolate chips, candy bar pieces, milk chocolate, white chocolate, semi-sweet chocolate, and the like), peanut butter chips, butterscotch chips, dried whole fruit or pieces thereof (e.g., raisins, coconut, and the like), fruit syrups and the like, seeds, grain particulates, cereal-based particulates, and/or texturized vegetable protein ("TVP"). A person of ordinary skill in the art can select appropriate amounts of these ingredients to be held with the cereal products in the binder.

In some embodiments, the cereal bar comprises from about 10% to about 40% RTE cereal components and in further embodiments from about 20% to about 25% RTE cereal components relative to the entire cereal bar with any coatings and/or fillings. Similarly, the cereal bar can comprise from about 10% to about 40% binder for the cereal components and in further embodiments from about 20% to about 25% binder relative to the entire cereal bar with any coatings and/or filings. The coated and/or filed cereal bar can comprise from about 2% to about 60% confectionery coating and/or filling composition, in further embodiments, from about 5% to about 50%, in other embodiments from about 10% to about 40%, and in additional embodiments from about 20% to about 30% confectionery coating and or filling composition, although the amount generally depends on the configuration of the coating and/or filling such as continuous, drizzled or other selected configuration. A person of ordinary skill in the art will recognize that additional ranges within the explicit ranges of proportions of cereal components, binder and confectionery composition are contemplated and are within the present disclosure.

The cereal bar generally has a relatively low moisture content and corresponding water activity, which is consistent with the low moisture coating and/or filling. Water activity plays an important role in relation to product stability and corresponding shelf life. For each cereal and binder combination, there generally is a narrow range of desirable Aw that results in a suitable commercial shelf life. Specifically, as the Aw increases, the cereal texture is negatively impacted, becoming soggy and stale with the specific value depending on the cereal selected. However, as Aw decreases, the binder becomes more crystalline and brittle due to absence of the plasticizing effect of the water. For most ingredients, the desirable range of water activity is from about 0.2 to about 0.55 and in further embodiments from about 0.4 to about 0.5. In further embodiments, the cereal bar has an Aw from about 0.4 to about 0.55, with a corresponding moisture content from about 6% to about 10%. Crunchy cereal bars generally have an Aw less than about 0.3. The sugar syrup used as a binder with the cereal pieces can be formulated to provide a more chewy texture or a more crispy or crunchy texture depending in large part upon sugar ingredient and amount selected. Also, adjustments within the ingredient ranges described herein as to the weight ratio of sugar binder solids to cereal base can also influence water activity and texture. Generally, the more sucrose used in the binder, the more crisp the finished products texture. With more corn syrup, the texture becomes more chewy. In some embodiments, the coating and/or filling has little or no moisture, e.g., less than about 2%. Having a coating and/or filling with little or no moisture decreases the moisture equilibration time and results in a more stable product. A person of ordinary skill in the art will recognize that additional ranges of water activities and moisture contents within the explicit ranges are contemplated and are within the present disclosure. Water activity can be determined using approaches known in the art, such as techniques based on the vapor pressure of water associated with the product at equilibrium. Specifically, Aw = p/p₀ = ERH/100, where p is the partial pressure of water surrounding the sample, p₀ is the vapor pressure of pure water at the same temperature and ERH is the equilibrated relative humidity (%) above the product.

The cereal bar can have any suitable shape and size. In some embodiments, the cereal bars have a substantially rectangular shape. In some representative embodiments, the cereal bar has a length from about 3 centimeters (cm) to about 13 cm, a width from about 3.2 cm to about 4 cm and a thickness from about 1.9 cm to about 3.2 cm. Similarly, the food bars can have any suitable weight. For example, the cereal bars can be bite-sized for an average consumer or larger embodiments. In some embodiments, the cereal bars have a weight from about 7 grams (g) to about 60 g, and in further embodiments from about 25 g to about 50 g. A person of ordinary skill in the art will recognize that additional ranges of size and weight within the explicit ranges are contemplated and are within the present disclosure.

The cereal bars with a coating and/or filling can be packaged in any suitable manner. In one embodiment, each cereal bar is individually wrapped, for example, in a flexible metallized film that forms a pouch. Any number of individually wrapped cereal bars can be packaged in a secondary container or carton, although the individually wrapped bars can be shipped without placement in a secondary container other than a large shipping container. Similarly, groups of bars, such as two bars, can be wrapped together within flexible metallized film, perhaps separated with a thin sheet.

### Baked Products and Other Products

In addition with association with cereal bars and other bite sized snack foods and cereal bars described above, the reduced sweetness confectionery coatings and/or fillings can be used with various baked goods. Suitable baked goods include, for example, cookies, muffins, cakes, bars, such as brownies, layered bars and other baked bars, sweet roles, pastries and the like. The baked good may be unleavened or leavened, such as yeast leavened, chemically leavened, or a combination thereof. Suitable cookies include, for example, oatmeal cookies, oatrneo-raisin cookies, chocolate, vanilla, chocolate chip cookies, sugar cookies, snickerdoodles, biscotti and the like. Filled or sandwich cookies are well known, such as Oreos®, and the reduced sweetness confectionery coating and/or filling described herein can be used for such fillings, Suitable muffins include, for example, fruit filled muffins, poppy-seed muffins, cup-cakes, bran muffins, corn muffins, and the like. Any of a wide range of cakes are suitable for use with the coatings and/or fillings described above. For any of these baked goods, the reduced sweetness confectionery composition can be applied as a filling and/or coating after the baked goods are baked.

### Processes For Associating Confectionary Coating Compositions With Food Items

In general, the reduce sweetness confectionery costing and/or filling compositions can be applied to a selected food product using approaches used for other confectionery coatings and fillings. For example, equipment for the manufacture of coated bite sized snacks are commercially available as these products are similarly widely available. The production of filled cereal bars and associated equipment are described in detail in U.S. Patent 6,592,915B to Froseth et al., entitled "Layered Cereal Bars and Their Methods of Manufacture,". The application of coatings to cereal bars and baked goods are well known in the art. The application of a filling to baked goods can be performed by layering, injection or any other convenient approach.

In the following preferred embodiments are summarized
1. A confectionery coating and/or filling composition comprising at least 25% by weight sugar, at least 5% by weight fat, and a sweetness reducing agent, wherein the moisture content of the composition is no more than 2% by weight and the sweetness reducing agent has a formula of 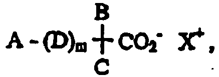 wherein m is 0 or 1;
   A represents a homocyclic or heterocyclic aromatic goup with one or more rings;
   B represents a hydrogen atom, a lower aliphatic group with 1-3 carbon atoms or a phenyl goup; or when m-0, A and B together can represent a bivalent homocyclic or heterocyclic aromatic group with two or more rings, or a methylidene group carrying as a substituent a homocyclic or heteocyclic aromatic group with one or more rings, an aromatic ring of A or of A and B together, optionally having one to three substituents selected from the group of lower alkoxy groups, lower alkyl groups, formyl groups acetyl groups, hydroxy groups, acyloxy groups and halogen atoms;
   C represents a hydrogen atom, or an alkyl group, or when m=0, a hydroxy group or an alkoxy group;
   D represents an oxygen or a sulfur; and
   X⁺ represents a hydrogen ion or other physiologically compatible cation.
2. The confectionery coating and/or filling composition of item 1 wherein the composition comprises at least 35% by weight sugar.
3. The confectionery coating and/or filling composition of item 1 wherein the composition comprises at least 10% by weight fat.
4. The confectionery coating and/or filling composition of item 1 further comprising from 0.5% to 20% by weight of a dry dairy ingredient.
5. The confectionery coating and/or filling composition of item 1 having a moisture content of no more than 1% by weight.
6. The confectionery coating and/or filling composition of item 1 wherein m=0 or wherein m=1 and D represents oxygen.
7. The confectionery coating and/or filling composition of item 1 wherein the sweetness reducing agent comprises a salt of 2-4 methoxyphenoxypropionic acid.
8. The confectionery coating and/or filling composition of item 7 wherein the composition comprises from 10 ppm to 5000 ppm 1 weetness reducing agent.
9. The confectionery coating and/or filling composition of item 1 wherein the sweetness reducing agent is co-crystallized with at least a portion of the sugar.
10. A food item comprising a core food element and the confectionery coating and/or filling of item 1 wherein the confectionery coating and/or filling is coated over at least a portion of core food element and/or filled within the core food element.
11. The food item of item 12 wherein the core food element comprises an item selected from the groups consisting of dried fruits, a pretzel, a malted milk ball, a peanut, a tree nut, seeds, and ready to eat cereal pieces, or
   item wherein the core food element comprises a baked good selected from the group consisting of a cookie, a muffin, cake and pastry.
12. The food item of item 12 wherein the confectionery coating and/or filling is aerated.
13. The food item of item 12 wherein the core food element comprises a cereal bar comprising at least 25% by weight grain products.
14. A method for forming a food item comprising associating a reduced sweetness confectionery coating and/or filling with a core food element, wherein the reduced sweetness confectionery coating/filling comprises a sweetness reducing agent and has a moisture content of no more than 2% by weight.
15. A bar comprising a cereal portion and a coating, the cereal portion comprising at least 25% by weight grain products and at least 25% by weight sugar, and the coating comprising at least 25% by weight sugar and a sweetness reducing agent comprising an aromatic-carboxylate salt.

The embodiments above are intended to be illustrative and not limiting. Additional embodiments are within the claims. Although the present invention has been described with reference to particular embodiments, workers skilled in the art will recognize that changes may be made in form and detail without departing from the spirit and scope of the invention. This application is intended to cover any adaptations or variations of the invention. It is intended that this invention be limited only by the following claims, and the full scope of equivalents thereof.

## Claims

1. A confectionery coating and/or filling composition comprising at least 25% by weight sugar, at least 5% by weight fat, and a sweetness reducing agent, wherein the moisture content of the composition is no more than 2% by weight and the sweetness reducing agent has a formula of 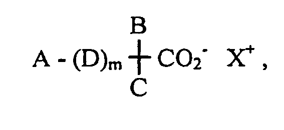 wherein m is 0 or 1;
A represents a homocyclic or heterocyclic aromatic group with one or more rings;
B represents a hydrogen atom, a lower aliphatic group with 1-3 carbon atoms or a phenyl group; or when m=0, A and B together can represent a bivalent homocyclic or heterocyclic aromatic group with two or more rings, or a methylidene group carrying as a substituent a homocyclic or heteocyclic aromatic group with one or more rings, an aromatic ring of A or of A and B together, optionally having one to three substituents selected from the group of lower alkoxy groups, lower alkyl groups, formyl groups, acetyl groups, hydroxy groups, acyloxy groups and halogen atoms;
C represents a hydrogen atom, or an alkyl group, or when m=0, a hydroxy group or an alkoxy group;
D represents an oxygen or a sulfur; and
X⁺ represents a hydrogen ion or other physiologically compatible cation.

2. The confectionery coating and/or filling composition of claim 1 wherein the composition comprises at least 35% by weight sugar.

3. The confectionery coating and/or filling composition of claim 1 wherein the composition comprise at least 10% by weight fat.

4. The confectionery coating and/or filling composition of claim 1 further comprising from 0.5% to 20% by weight of a dry dairy ingredient.

5. The confectionery coating and/or filling composition of claim 1 having a moisture content of no more than 1% by weight.

6. The confectionery coating and/or filling composition of claim 1 wherein m=0 or wherein m=1 and D represents oxygen.

7. The confectionery coating and/or filling composition of claim 1 wherein the sweetness reducing agent comprises a salt of 2-(4-methoxyphenoxy)propionic acid.

8. The confectionery coating and/or filling composition of claim 7 wherein the composition comprises from 10 ppm to 5000 ppm sweetness reducing
agent.

9. The confectionery coating and/or filling composition of claim 1 wherein the sweetness reducing agent is co-crystallized with at least a portion of the sugar.

10. A food item comprising a core food element and the confectionery coating and/or filling of claim 1 wherein the confectionery coating and/or filling is coated over at least a portion of core food element and/or filled within the core food element.

11. The food item of claim 10 wherein the core food element comprises an item selected from the groups consisting of dried fruits, a pretzel, a malted milk ball, a peanut, a tree nut, seeds, and ready to eat cereal pieces, or
wherein the core food element comprises a baked good selected from the group consisting of a cookie, a muffin, cake and pastry.

12. The food item of claim 10 wherein the confectionery coating and/or filling is aerated.

13. The food item of claim 10 wherein the core food element comprises a cereal bar comprising at least 25% by weight grain products.

14. A method for forming a food item comprising associating a reduced sweetness confectionery coating and/or filling with a core food element, wherein the reduced sweetness confectionery coating and/or filling comprises a sweetness reducing agent and has a moisture content of no more than 2% by weight.

15. A bar comprising a cereal portion and a coating, the cereal portion comprising at least 25% by weight grain products and at least 25% by weight sugar, and the coating comprising at least 25% by weight sugar and a sweetness reducing agent comprising an aromatic-carboxylate salt.

## Patentansprüche

1. Süßwarenüberzug- und/oder -füllungszusammensetzung, umfassend wenigstens 25 Gew.-% Zucker, wenigstens 5 Gew.-% Fett und ein süßeverringerndes Mittel, wobei der Feuchtegehalt der Zusammensetzung nicht mehr als 2 Gew.-% beträgt und das süßeverringernde Mittel eine Formel von 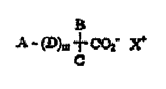 aufweist, wobei m 0 oder 1 ist;
A eine homooyclische oder heterocyclische aromatische Gruppe mit einem oder mehreren Ringen darstellt;
B Wasserstoffatom, eine niederaliphatische Gruppe mit 1-3 Kohlenstoffatomen oder eine Phenylgruppe darstellt; oder wenn m = 0, A und B zusammen eine zweiwertige homocyclische oder heterocyclische aromatische Gruppe mit zwei oder mehr Ringen oder eine Methylidengruppe, die als Substituenten eine homocyclische oder heterocyclische aromatische Gruppe mit einem oder mehreren Ringen trägt, darstellen können, wobei ein aromatischer Ring von A oder von A und B zusammen gegebenenfalls einen bis drei Substituenten, ausgewählt aus der Gruppe von Niederalkoxygruppen, Niederalkylgruppen, Formylgruppen, Acetylgruppen, Hydroxygruppen, Acyloxygruppen und Halogenatomen, aufweist;
C ein Wasserstoffatom oder eine Alkylgruppe oder wenn m = 0, eine Hydroxygruppe oder eine Alkoxygruppe darstellt;
D einen Sauerstoff oder einen Schwefel darstellt; und
X⁺ ein Wasserstoff-Ion oder ein anderes physiologisch verträgliches Kation darstellt.

2. Süßwarenüberzug- und/oder -füllungszusammensetzung gemäß Anspruch 1, wobei die Zusammensetzung wenigstens 35 Gew.-% Zucker umfasst.

3. Süßwarenüberzug- und/oder -füllungszusammenseezung gemäß Anspruch 1, wobei die Zusammensetzung wenigstens 10 Gew.-% Fett umfasst.

4. Süßwarenüberzug- und/oder -füllungs zusammensetzung gemäß Anspruch 1, ferner umfassend von 0,5 Gew.-% bis 20 Gew.-% an einem Trockenmilch-Inhaltsstoff.

5. Süßwarenüberzug- und/oder -füllungszugammensetzung gemäß Anspruch 1, die einen Feuchtegehalt von nicht mehr als 1 Gew.-% aufweist.

6. Süßwarenüberzug- und/oder -füllungszusammensetzung gemäß Anspruch 1, wobei m = 0 oder wobei m = 1 und D Sauerstoff darstellt.

7. Süßwarenüberzug- und/oder -füllungszusammensetzung gemäß Anspruch 1, wobei das süßeverringernde Mittel ein Salz von 2-4-Methoxyphenoxypropionsäure umfasst.

8. Süßwarenüberzug- und/oder -füllungszusammensetzung gemäß Anspruch 7, wobei die Zusammensetzung von 10 ppm bis 5000 ppm an süßeverringerndem Mittel umfasst.

9. Süßwarenüberzug- und/oder -füllungszusammensetzung gemäß Anspruch 1, wobei das süßeverringernde Mittel mit wenigstens einer Portion des Zuckers kokristallisiert ist.

10. Nahrungsmitteleinheit, umfassend ein Kern-Nahrungsmittelelement und den/die Süßwarenüberzug und/oder -füllung gemäß Anspruch 1, wobei der/die Süßwarenüberzug und/oder -füllung über wenigstens einen Teil des Kern-Nahrungsmittelelements geschichtet und/oder in das Kern-Nahrungsmittelelement gefüllt ist.

11. Nahrungsmitteleinheit gemäß Anspruch 10, wobei das Kern-Nahrungsmittelelement eine Einheit umfasst, ausgewählt aus den Gruppen bestehend aus getrockneten Früchten, einer Bretzel, einer Malzmilchkugel, einer Erdnuss, einer Baumnuss, Samen und verzehrfertigen Zerealienstücken, oder wobei das Kern-Nahrungsmittelelement eine Backware umfasst, ausgewählt aus der Gruppe bestehend aus einem Keks, einem Muffin, Kuchen und Gebäck.

12. Nahrungsmitteleinheit gemäß Anspruch 10, wobei der/die Süßwarenüberzug und/oder -füllung mit Luft durchsetzt ist.

13. Nahrungsmitteleinheit gemäß Anspruch 10, wobei das Kern-Nahrungsmittelelement einen Zerealienriegel umfasst, umfassend wenigstens 25 Gew.-% Getreideprodukte.

14. Verfahren zum Herstellen einer Nahrungsmitteleinheit, umfassend das Verbinden eines/einer Süßwarenüberzugs und/oder -füllung mit verringerter Süße mit einem Kern-Nahrungsmittelelement, wobei der/die Süßwarenüberzug/-füllung mit verringerter Süße ein süßeverringerndes Mittel umfasst und einen Feuchtegehalt von nicht mehr als 2 Gew.-% aufweist.

15. Riegel, umfassend einen Zerealienteil und einen Überzug, wobei der Zerealienteil wenigstens 25 Gew.-% Getreideprodukte und wenigstens 25 Gew.-% Zucker umfasst und der überzug wenigstens 25 Gew.-% Zucker und ein süßeverringerndes Mittel, umfassend ein aromatisches Carboxylatsalz, umfasst.

## Revendications

1. Composition d'enrobage et/ou de fourrage pour confiseries comprenant au moins 25 % en poids de sucre, au moins 5 % en poids de matières grasses, et un agent réducteur de sucrosité, la teneur en humidité de la composition n'étant pas supérieure à 2 % en poids et l'agent réducteur de sucrosité ayant la formule 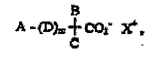 dans laquelle m vaut 0 ou 1 ;
A représente un groupe aromatique homocyclique ou hétérocyclique comportant un ou plusieurs cycles :
B représente un atome d'hydrogène, un groupe aliphatique inférieur comprenant 1-3 atomes de carbone ou un groupe phényle ; ou quand m vaut 0,
A et B peuvent représenter ensemble un groupe aromatique homocyclique ou hétérocyclique bivalent comprenant deux cycles ou plus, ou un groupe méthylidène portant comme substituant un groupe aromatique homocyclique ou hétérocyclique comprenant un ou plusieurs cycles, un cycle aromatique de A, ou de A et de B ensemble, pouvant éventuellement comporter 1 à 3 substituants sélectionnés dans le groupe constitué de groupes alcoxy inférieurs, de groupes alkyle inférieurs, de groupes formyle, de groupes acétyle, de groupes hydroxy, de groupes acyloxy et d'atomes d'halogènes ;
C représente un atome d'hydrogène, ou un groupe alkyle, ou, quand m vaut 0, un groupe hydroxy ou un groupe alcoxy ;
D représente un atome d'oxygène ou un atome de soufre ; et
X⁺ représente un ion hydrogène ou un autre cation physiologiquement compatible.

2. Composition d'enrobage et/ou de fourrage pour confiseries selon la revendication 1, la composition comprenant au moins 35 % en poids de sucre.

3. Composition d'enrobage et/ou de fourrage pour confiseries selon la revendication 1, la composition comprenant au moins 10 % en poids de matières grasses.

4. Composition d'enrobage et/ou de fourrage pour confiseries selon la revendication 1, comprenant en outre de 0,5 % à 20 % en poids d'un ingrédient laitier sec.

5. Composition d'enrobage et/ou de fourrage pour confiseries selon la revendication 1, ayant une teneur en humidité qui n'est pas supérieure à 1 % en poids.

6. Composition d'enrobage et/ou de fourrage pour confiseries selon la revendication 1, dans laquelle m vaut 0 ou dans laquelle m vaut 1 et D représente un atome d'oxygène.

7. Composition d'enrobage et/ou de fourrage pour confiseries selon la revendication 1, dans laquelle l'agent réducteur de sucrosité comprend un sel d'acide 2-4-méthoxyphénoxypropionique.

8. Composition d'enrobage et/ou de fourrage pour confiseries selon la revendication 7, la composition comprenant de 10 ppm à 5 000 ppm d'agent réducteur de sucrosité.

9. Composition d'enrobage et/ou de fourrage pour confiseries selon la revendication 1, dans laquelle l'agent réducteur de sucrosité est co-cristallisé avec au moins une partie du sucre.

10. Produit alimentaire comprenant un élément alimentaire central et l'enrobage et/ou le fourrage pour confiseries selon la revendication 1, l'enrobage et/ou le fourrage pour confiseries étant appliqué sur au moins une partie de l'élément alimentaire central et/ou utilisé comme fourrage dans l'élément alimentaire central.

11. Produit alimentaire selon la revendication 10, dans lequel l'élément alimentaire central comprend un article sélectionné dans le groupe constitué de fruits secs, d'un pretzel, d'une boulette de lait malté, d'une cacahuète, d'un fruit à coque, de graines, et de blocs de céréales prêts à consommer, ou dans lequel l'élément alimentaire central comprend un article cuit sélectionné dans le groupe constitué d'un biscuit, d'un muffin, d'un gâteau et d'une pâtisserie.

12. Produit alimentaire selon la revendication 10, dans lequel l'enrobage et/ou le fourrage pour confiseries est aéré.

13. Produit alimentaire selon la revendication 10, dans lequel l'élément alimentaire central comprend une barre de céréales contenant au moins 25 % en poids de produits céréaliers.

14. Procédé de formation d'un produit alimentaire, consistant à associer un enrobage et/ou fourrage pour confiseries à sucrosité réduite avec un élément alimentaire central, l'engobage et/ou le fourrage pour confiseries à sucrosité réduite comprenant un agent réducteur de sucrosité et ayant une teneur en humidité qui n'est pas supérieure à 2 % en poids.

15. Barre comprenant une partie constituée de céréales et un enrobage, la partie constituée de céréales contenant au moins 25 % en poids de produits céréaliers et au moins 25 % en poids de sucre et l'enrobage contenant au moins 25 % en poids de sucre et un agent réducteur de sucrosité comprenant un sel aromatique-carboxylate.
